# EUROPEAN PATENT APPLICATION

(11) **EP 1 293 421 A2**
(43) Date of publication of application: **19.03.2003**
(21) Application number: 02255798.7
(22) Date of filing: 20.08.2002
(51) Int. Cl.: B62D 65/00

(54) **Automotive body component positioning method and apparatus**

(30) Priority: 21.08.2001 US 314133 P; 13.08.2002 US 217879
(71) Applicant: Unova IP Corp., Woodland Hills, CA 91367-7418 (US)
(72) Inventor: McNamara, Jeffrey S., Grosse Ile, MI 48138 (US)
(74) Representative: Forsyth, Helen Jane

(57) **Abstract**

An automotive body component positioning method and apparatus including a framing station that receives and supports the two gates of a framing gate pair in respective framing positions against opposite sides of a vehicle body disposed between them. At least two framing gate pairs are movable between the framing station and respective gate pair storage stations. Each framing gate pair includes a plurality of locating fixtures that hold sub-elements of a vehicle body in their respective proper positions relative to one another when the gates are held in their respective framing positions. Each framing gate pair accommodates a specific corresponding vehicle body configuration. A turntable is rotatably supported adjacent the framing station with the gate storage stations spaced circumferentially around and adjacent the turntable. The turntable is rotated into respective positions to receive a framing gate pair from any one of the stations and is then rotated into respective positions to allow the framing gate pair to be offloaded to any other of the stations.

## Description

### Reference to Related Application

Applicant claims the benefit of provisional application, Serial No. 60/314,133, filed August 21, 2001.

### BACKGROUND OF THE INVENTION

### Field of the Invention

This invention relates generally to an automotive body framing system and more particularly to a system for positively locating and holding together loosely assembled components of any one of a number of different automotive body configurations to prepare the components to be welded together in an automotive assembly line process.

### Description of the Related Art Including Information Disclosed Under 37 CFR 1.97 and 1.98

In manufacturing automotive bodies, it's necessary to join various body components such as roof, floor and side body sections. In many framing systems, the body components are first loosely "toy-tabbed" together before they are welded. Toy-tabbing allows enough freedom of relative movement between the body components that they can be properly located before welding. The toy-tabbed body assembly is then moved to a framing station where it is engaged by locating fixtures carried by a pair of framing gates that are moved toward either side of the body by a framing drive system. The gates positively locate and hold the loosely assembled body components together long enough for welding machines or human welders to form enough welds between the body components to hold them rigidly together. A "re-spot" welding operation may subsequently be carried out which adds additional welds and thus further strengthens the body.

For example, United States Patent Number 5,560,535 issued October 1, 1996 to Miller et al. and assigned to the assignee of the present invention, discloses a framing system including a pair of framing station stands that support framing gates for reciprocal motion between respective stowed and framing positions. In their respective stowed positions, the gates are spaced from and generally parallel to a vehicle body assembly line path passing between them. In their respective framing positions, the gates are disposed closer to the vehicle body assembly line path. When a vehicle body assembly is disposed between the gates on the path, locating fixtures supported on the gates engage and hold sub-elements of that vehicle body assembly in proper positions relative to each other for welding. A harmonic gate drive is operably connected to the stands and drives the gates between their stowed and framing positions. The Miller et al. framing system includes a pair of loaders that are located adjacent the framing station and that store a second set of gates for use in framing a vehicle having a different body configuration.

Other framing systems that can locate and hold together components of more than one automotive body configuration are also known. For example, United States Patent No. 5,313,695 issued 24 May 1994 to Negre et al. discloses a framing station that includes a support frame having roof under which vehicle bodies are carried along a vehicle assembly line path by an assembly line carriage system. The Negre et al. framing station includes four gates supported in two diametrically-opposed gate pairs on the frame roof for rotational movement around a common vertical axis and pivotal movement about respective horizontal axes between a stowed position and a framing position. Each gate pair is configured to service a different automotive body configuration. A rotary drive is operatively connected to the gate assemblies and rotates the gate pairs around the common vertical axis between an idle position aligned with the vehicle path and a framing position transverse to the vehicle path when the gate assemblies are in their respective generally horizontal stowed positions. The rotary drive selectively positions one of the two gate assembly pairs at a time in the framing position where the two gate assemblies of the selected gate assembly pair can be pivoted downward to their respective framing positions. A pivot drive is also operatively connected to the gate assemblies and rotates the gate assemblies of the selected gate assembly pair between their respective stowed and framing positions on either side of a vehicle body to be welded. A plurality of tool fixtures are supported on each gate assembly and support tools in positions to secure a vehicle body positioned within the support frame when the gate assemblies are in their respective framing positions. The fixture positioning for each gate assembly pair is adapted to accommodate a specific corresponding vehicle body type. This allows an operator to rapidly convert the apparatus between two different configurations required to perform welding operations on two different vehicle body types. The conversion is accomplished by first upwardly pivoting the gate assemblies of a previously selected gate assembly pair to their respective stowed positions. The gate assemblies of a newly selected gate assembly pair are then rotated into the framing position and are pivoted downward to their respective framing positions.

Another example a framing system capable of servicing two different automotive body configurations is disclosed in United States Patent No. 4,670,961 issued 9 June, 1987 to Fontaine et al. The Fontaine et al. patent discloses a front rotary gate assembly magazine suspended from a support frame roof above a vehicle assembly line path and supporting four front gate assemblies for rotation about a front vertical axis and for pivotal motion about respective horizontal axes. Each of the front gate assemblies is selectively rotatable to a front framing position and, from the front framing position is downwardly pivotable to a framing position to hold a front region of a vehicle body in position beneath the support frame roof for subsequent manufacturing operations. A rear rotary gate assembly magazine is also suspended from a support frame roof above a vehicle path and supports four rear gate assemblies for rotation about a rear vertical axis and for pivotal motion about respective horizontal axes. Each of the rear gate assemblies is selectively rotatable to a rear framing position and, from the rear framing position is downwardly pivotable to an framing position to hold a rear region of a vehicle body in position beneath the support frame roof for subsequent manufacturing operations.

A framing system that services a plurality of different automotive body configurations is disclosed in United States Patent No. 4,682,722 issued 28 July 1987 to Bossotto et al. The Bossoto et al. framing system includes fanned-out arrays of interchangeable framing gates and swinging door-like gate retrieval mechanisms that pivot to various angular positions exchange framing gates between respective storage positions outside a framing station and work positions within the framing station. The gates for each side of the framing station are stored separately taking up floor space on both sides of the framing station.

United States Patent No. 6,008,471 issued 28 December 1999 to Alborante discloses a welding station that includes two interchangeable locating gate pairs that are alternately movable between storage positions and a work position within the station on rails. The storage positions are located adjacent either end of the station along an assembly line path. When holding automotive body components in position for welding, the gates of each gate pair are rigidly connected together by quick coupling means. The gates are separated from each other to release and receive work pieces and are also separated from each other for transport and storage.

### Brief Summary of the Invention

According to the invention, an automotive body component positioning apparatus is provided that includes a framing station configured to receive and support the two gates of a framing gate pair in respective framing positions against opposite sides of a vehicle body disposed between them. At least two framing gate pairs are movable between respective gate pair storage stations and the framing station. Each framing gate pair includes a plurality of locating fixtures positioned and configured to hold sub-elements of a vehicle body in their respective proper positions relative to one another when the gates are held in their respective framing positions. Each framing gate pair is adapted to accommodate a specific corresponding vehicle body configuration. A turntable is rotatably supported adjacent the framing station and the gate storage stations are spaced circumferentially around and adjacent the turntable. The turntable is configured to be rotated into respective positions to receive a framing gate pair from any one of the stations and to then be rotated into respective positions to allow the framing gate pair to be offloaded to any other of the stations.

According to another aspect of the invention, a re-spot welding station is disposed on the turntable.

The invention also includes a method for positively locating and holding together loosely assembled components of any one of a number of different automotive body configurations to prepare the components to be welded together. According to the method, a framing station is first provided that includes at least two framing gate pairs movable between respective gate pair storage stations and the framing station. Also provided is a turntable rotatably supported adjacent the framing station with the gate storage stations spaced circumferentially around and adjacent the turntable. The turntable is rotated into a position to receive a first desired gate pair from one of the storage stations and a first desired gate pair is moved onto the turntable from a first storage station. The turntable is then rotated into a position to unload the first gate pair onto the framing station and the first gate pair is moved to the framing station from the turntable. The first gate pair is then moved to the turntable from the framing station and the turntable is rotated into a position to unload the first gate pair onto an empty storage station. The first gate pair is then moved from the turntable to the empty storage station.

According to another aspect of the inventive method, after the first gate pair has been moved from the turntable to the empty storage station, the turntable is rotated into a position to receive a second desired gate pair from a second storage station. The second gate pair is moved onto the turntable from the second storage station and the turntable is then rotated into a position to unload the second gate pair onto the framing station. The second gate pair is then moved to the framing station from the turntable.

Objects, features and advantages of this invention include providing a framing system that is able to positively locate and hold together components of a variety of different automotive bodies for welding, that allows gate pairs to be supplied to a framing station from a plurality of storage stations allowing a plurality of vehicle body configurations to be handled by a single framing station, that allows an operator to rapidly convert the system between different configurations required to handle different vehicle body configurations, that allows gates to be stored at ground level where they, and the transport systems that facilitate their movement, can be more easily serviced, and that provides for the inclusion of a re-spot welding station on the turntable so that the turntable doesn't require separate, dedicated floor space or increasing the overall length of the welding line.

### Brief Description of the Several Views of the Drawings

These and other objects, features and advantages of this invention will be apparent from the following detailed description of the preferred embodiment(s) and best mode, appended claims, and accompanying drawings in which:
FIG. 1 is a schematic orthogonal view of a framing apparatus constructed according to the invention a first of four different gate pairs disposed at a framing station of the apparatus;
FIG. 2 is a schematic orthogonal view of the framing apparatus of Figure 1 showing the first gate pair disposed on a turntable of the apparatus;
FIG. 3 is a schematic orthogonal view of the framing apparatus of Figure 1 showing the turntable rotated to unload the first gate pair onto a first storage station from the turntable;
FIG. 4 is a schematic orthogonal view of the framing apparatus of Figure 1 showing the first gate pair supported on the first storage station;
FIG. 5 is a schematic orthogonal view of the framing apparatus of Figure 1 showing the turntable rotated to receive a second gate pair of the apparatus from a second storage station of the apparatus;
FIG. 6 is a schematic orthogonal view of the framing apparatus of Figure 1 showing the second gate pair supported on the turntable;
FIG. 7 is a schematic orthogonal view of the framing apparatus of Figure 1 showing the turntable rotated to unload the second gate pair onto the framing station;
FIG. 8 is a schematic orthogonal view of the framing apparatus of Figure 1 showing the second gate pair disposed on the framing station;
FIG. 9 is an end view of a framing station of the framing apparatus of Figure 1 showing gates supported at the framing station in respective framing positions engaging a vehicle body supported on a conveyor between the gates;
FIG. 10 is an end view of the framing station of Figure 9 showing the gates after having been advance past their respective framing positions and into engagement with one another in preparation for transport; and
FIG. 11 is an end view of the framing station of Figure 10 showing the gates interconnected and supported in a transport position.

### Detailed Description of the Preferred Embodiment

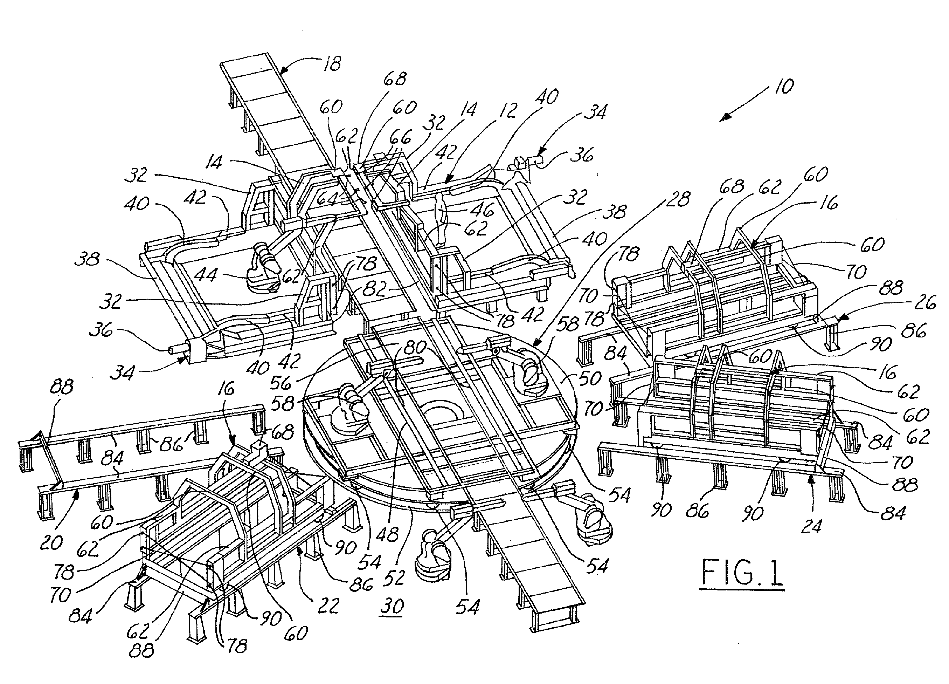

An automotive body component positioning apparatus for positively locating and holding together loosely assembled automotive body components in preparation for welding is shown in the drawings. As is shown in each of Figures 1-8, the apparatus 10 includes a framing station 12 disposed along a vehicle body assembly line. The framing station 12 receives and supports the two gates 14 of a framing gate pair 16 in respective framing positions engaging opposite sides of a vehicle body disposed between them on an assembly line conveyor 18. The apparatus 10 also includes four different framing gate pairs 16, each movable between the framing station 12 and four respective gate pair storage stations 20, 22, 24, 26. Each framing gate pair 16 includes a plurality of locating fixtures (not shown) positioned and shaped to hold sub-elements of a vehicle body in their respective proper positions relative to one another when the gates 14 are held in their respective framing positions. Each framing gate pair 16 accommodates a specific corresponding vehicle body configuration. The apparatus 10 also includes a turntable 28 rotatably supported adjacent the framing station 12. The four gate storage stations 20, 22, 24, 26 are spaced circumferentially around and adjacent the turntable 28. In other embodiments, either more or fewer than four gate pairs 16 and corresponding gate storage stations 20, 22, 24, 26 may be arrayed around the turntable 28. The turntable 28 is rotatably supported so that it can be rotated into respective positions to receive a framing gate pair 16 from any one of the four stations and to then be rotated into respective positions to allow the framing gate pair 16 to be offloaded to any other of the stations. The framing station 12, turntable 28 and storage stations 20, 22, 24, 26 are supported on a common support surface 30, e.g., a factory floor.

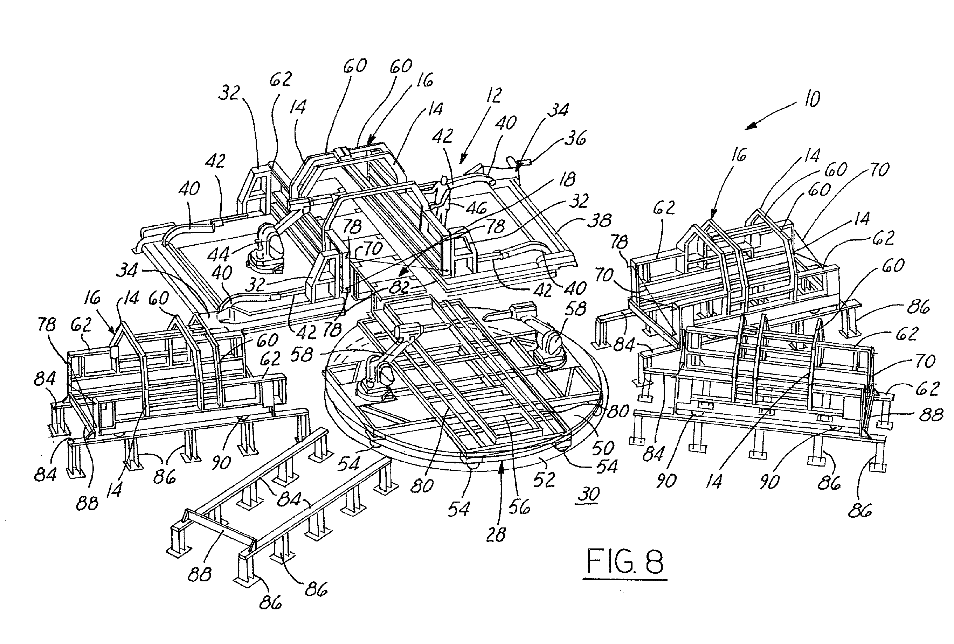

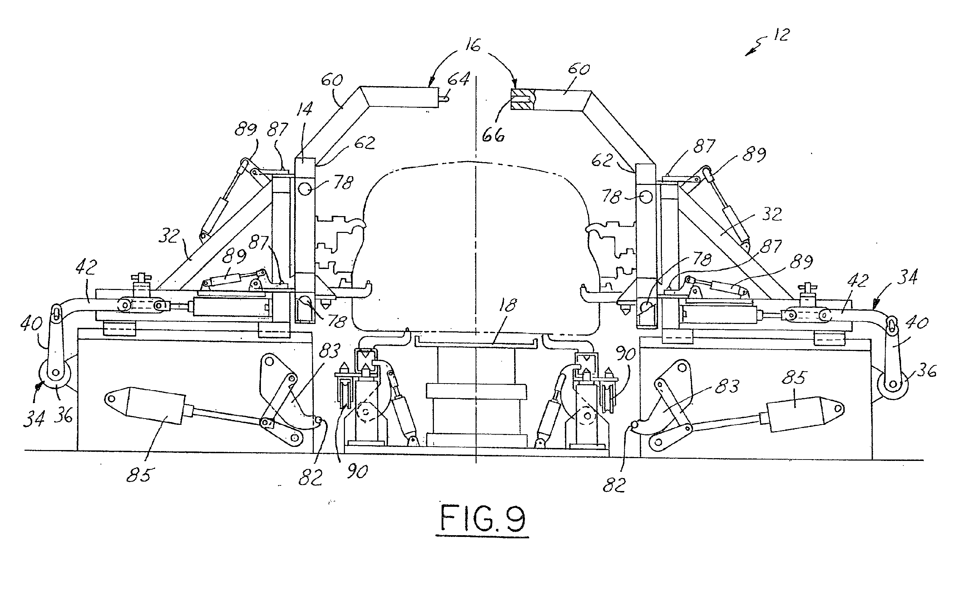

As best shown in Figures 9-11, the framing station 12 includes two pairs of frame stands 32 supported for reciprocal motion toward and away from each other on opposite sides of the conveyor 18. The frame stands 32 receive and move the two gates 14 of a framing gate pair 16 between respective framing positions and stowed, and transport positions. In their stowed positions, the gates 14 of a framing gate pair 16 are spaced from and generally parallel to respective opposite sides of a vehicle body assembly line conveyor 18 disposed between them. In their transport positions, the gates 14 of a framing gate pair 16 are abutting one another as shown in Figure 8. The framing station 12 shown in the drawings is described in detail in U.S. Patent No. 5,560,535, which is assigned to the assignee of the present invention and is incorporated herein by reference. Other embodiments may use any suitable framing station in place of the one shown in the drawings and described in the above patent.

A harmonic framing drive 34 is operatively connected to the frame stands 32 and moves the frame stands 32, which drive the framing gates 14 between their stowed and framing positions. The harmonic framing drive 34 includes two reversible motors 36 that drive respective torque tubes 38. Each end of each torque tube 38 drives an arm 40 and a link 42 that is coupled to one of the frame stands 32. The reciprocal rotation of the motors 36 and the torque tubes 38 causes the arms 40 and the links 42 to reciprocate, which causes the frame stands 32 and the gates 14 to reciprocate between the stowed and framing positions. The framing drive 34 is also actuable to move the frame stands 32 and gates 14 past their framing positions to their transport position. In other embodiments, any suitable drive mechanism may be used such as the harmonic drive mechanism disclosed in United States Patent No. 5,560,535, which is assigned to the assignee of the present invention and is incorporated herein by reference.

Welding means such as framing station robots 44 or a human welders 46 are disposed on either side of the framing station 12 and are positioned to apply a sufficient number of welds between body components to make each body self-supporting and rigid. Any suitable form of welding means may be used.

The turntable 28 is disposed downstream from the framing station 12 along the vehicle body assembly line and supports a re-spot welding station 48. The re-spot welding station 48 receives automotive bodies from the framing station 12 to allow additional welds to be accomplished on the bodies. The turntable 28 includes a circular platform 50 supported on a circular track 52 by eight wheels 54 supported at spaced locations around a periphery of the platform 50. A section 56 of the assembly line conveyor 18 is carried diametrically across the platform 50. Respot welding robots 58 are supported on either side of this section of assembly line conveyor 18 in respective positions to have access to an automotive body supported on the conveyor 18 section between them for creating welds on the body. In other embodiments, welds may be applied at the re-spot welding station 48 by any suitable welding machine to include a human welder.

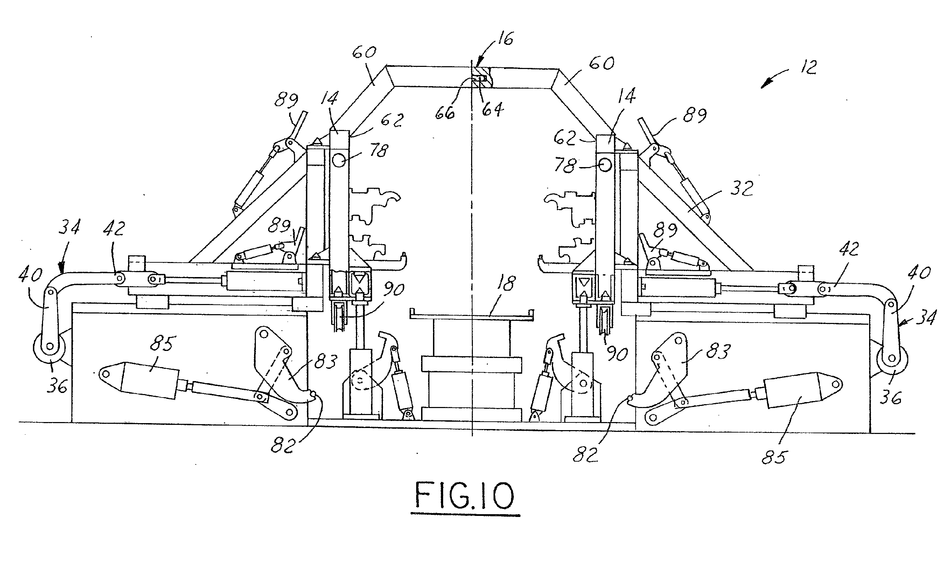

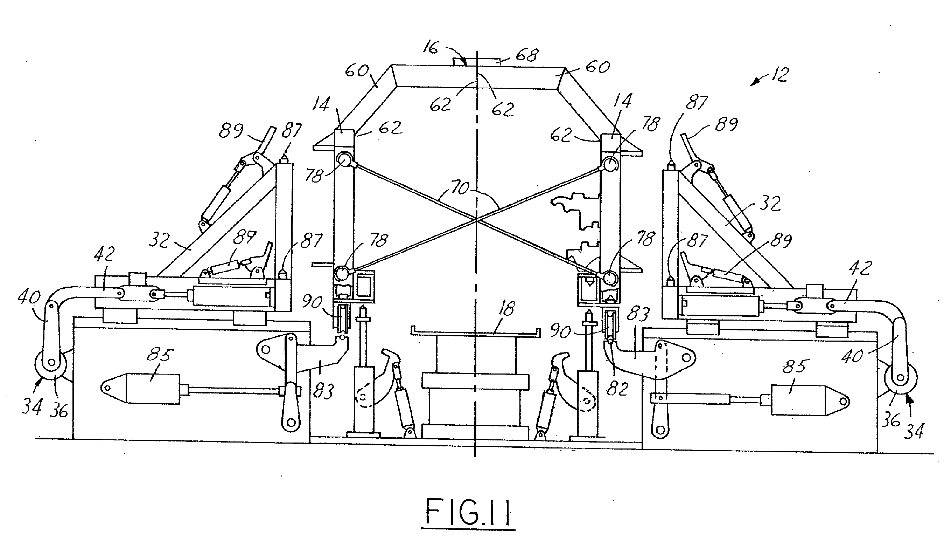

As shown in Figures 10 and 11, the gates 14 of each gate pair 16 releasably interconnect when moved together into a position abutting one another so that they can be transported and stored together. Each gate pair 16 includes a pair of releasably interconnecting extension frames 60. Each extension frame 60 is fixed to an upper edge 62 of one of the gates 14 of the gate pair 16. The extension frames 60 releasably interconnect along respective interfacing edges 62 when the gates 14 of the gate pair 16 are moved together. As such, the extension frames 60 hold the gates 14 in relative positions accessible for engagement when the gate pair 16 is moved into the framing station 12.

As best shown in Figure 1, the interfacing edges 62 of the extension frames 60 of each gate pair 16 include locating pins 64 and corresponding pin receptacles 66. The pin receptacles 66 receive the pins 64 when the interfacing edges 62 of the extension frames 60 are brought together in the transport position. The pins 64 and pin receptacles 66 thus positively locate the gates 14 of each framing gate pair 16 in relation to one another for transport and for subsequent engagement upon delivery to the framing station 12.

Each gate pair 16 also includes clamps 68 that hold the interconnecting extension frames 60 of each gate pair 16 together in the transport position. The clamps 68 further secure the gates 14 of each framing gate pair 16 in their proper relative orientation and prevent the gates 14 of each framing gate pair 16 from pulling apart along the interfacing edges 62 of the extension frames 60.

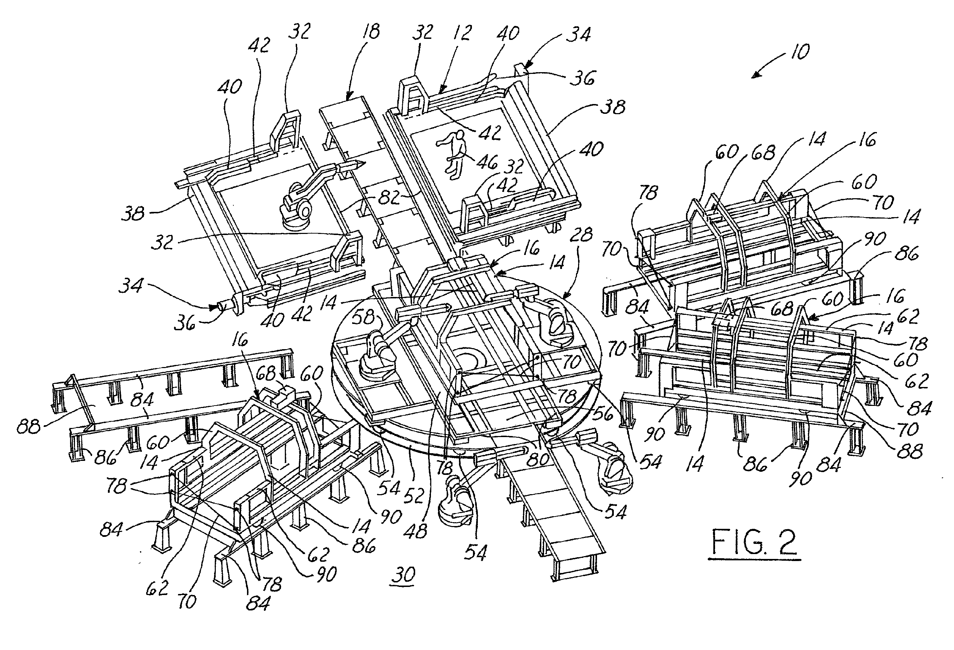

As best shown in Figures 2 and 11, each gate pair 16 includes two pairs of tie bars 70. The tie bar pairs releasably connect between the two frames of each gate pair 16 to provide structural rigidity for transport and storage. The two pairs of tie bars 70 connect across respective front and rear ends of the gate pairs 16. Vertical end posts disposed at the ends of each gate of each gate pair 16 each include two vertically spaced locking posts 78. The ends of the tie bars 70 releasably engage diagonally opposite ones of the locking posts 78 to form an X pattern. The locking posts 78 allow the bars 70 to be easily installed for transport and storage and then removed for framing operations at the framing station 12.

The turntable 28 includes a pair of parallel turntable rails 80 positioned to support the gate pairs 16. The turntable rails 80 are disposed on either side of and parallel to the turntable conveyor section 56 that runs down the middle of the turntable 28. The turntable rails 80 support and guide gate pairs 16 when the gate pairs 16 are positioned on the turntable 28 and as they are being rolled on and off the turntable 28. These turntable rails 80 are positioned to be rotated into alignment with a pair of corresponding framing station rails 82 supported on the framing station 12 so that gate pairs 16 can be rolled from the turntable 28 to the framing station 12 and *vice versa.*

The framing station rails 82 are positioned parallel to one other on opposite sides of the portion of the conveyor 18 that runs through the framing station 12. The framing station rails 82 support and guide gate pairs 16 as the gate pairs 16 are being moved between the turntable 28 and the framing station 12. The rails 82 are movable between the supporting positions shown in Figure 11 and the stowed position shown in Figure 10 by four pivotally mounted rail arms 83 and are driven through a mechanical linkage by rail drive cylinders 85. In moving the rails 82 to the supporting position, the arms 83 also lift the gate pair 16 free of frame stand pins 87 that support the gates on the frame stands 32 as best shown in Figure 11. Before a gate pair 16 can be lifted free of the frame stands 32 in this way, frame stand locks 89 must first be retracted.

Each of the storage stations 20, 22, 24, 26 also includes a pair of parallel storage station rails 84 positioned to support and guide a gate pair 16 as it is being moved between a turntable 28 and the storage stations 20, 22, 24, 26. Each storage station rail 84 at each storage station is supported by five longitudinally spaced supports 86. At least one cross beam 88 at each station provides a back-stop to prevent a gate pair 16 from rolling off a storage station.

The framing station rail ends that face the turntable 28 are spaced from the turntable 28 and the ends of the turntable rails 80 when the framing station 12 and turntable rails 80 are aligned. This allows space for operators and maintenance personnel to move freely between the framing station 12 and the turntable 28.

The framing gates 14 are fitted with gate wheels 90 that allow the gate pairs 16 to be rolled on and off of the framing and storage station rails 82, 84 and onto and off of the turntable rails 80. The gate wheels 90 are flanged, as best shown in Figures 9-11, to adapt the gate pairs 16 to rail travel between the stations in a conventional manner. The gate pairs 16 may be moved along the rails by a tractor, by manual power supplied by human operators, or by any other suitable means. In other embodiments, the gate pairs 16 may also be transported by a conveyor 18 system that doesn't employ rails.

The ends of the storage station rails that face the turntable 28 are spaced from the turntable 28 and from the ends of the rails of the turntable 28 when the turntable rails 80 are aligned with the respective storage stations 20, 22, 24, 26. This allows space for operators and maintenance personnel to move freely between the turntable 28 and the storage stations 20, 22, 24, 26.

In practice, framing station gates 14 can be interchanged by first rotating the turntable 28 into a position to receive a first desired gate pair 16 from one of the four storage stations 20, 22, 24, 26. The turntable 28 is rotated until its rails are aligned with the rails of the first storage station when the first gate pair 16 is movably supported on the rails. The first gate pair 16 is then moved to the turntable 28 from the framing station 12 by rolling the first gate pair 16 from the storage station rails to the turntable rails 80. The turntable 28 is then rotated into a position to unload the first gate pair 16 onto the framing station 12. The turntable 28 is rotated until the turntable rails 80 are aligned with the framing station rails 82.

The first gate pair 16 is then moved to the framing station 12 from the turntable 28. The first gate pair 16 is rolled from the turntable rails 80 to the framing station rails 82.

Once the gate pair 16 is positioned on the framing station rails 82 the frame stands 32 are driven inward by the framing drive 34 to engage the gates 14 of the gate pair 16. The tie bars 70 are then removed from the locking post, the clamps 68 holding the extension frames 60 together are released, and the framing drive 34 carries the separated gates 14 away from each other to their respective stowed positions. With the gates 14 installed at the framing station 12, a series of automotive body assemblies are moved along the conveyor 18 through the framing station 12 and the re-spot station 48. As the conveyor 18 carries each body assembly into the framing station 12 it pauses long enough for the framing drive 34 to move the gates 14 into their framing positions where the locating fixtures on the gates 14 engage and positively locate the sub-elements of the body, i.e., the roof, the floor and the sides of the body, and for welding machines or human welders to form enough welds between the sub elements to securely lock them in position relative to one another. Once the framing drive 34 has moved the gates 14 from their framing positions to their stowed positions, the conveyor 18 transports the body to the re-spot station 48 where it again pauses long enough for human welders and/or welding machines located at the re-spot station 48 to accomplish additional welds and further secure the sub elements of the vehicle body in relation to each other. When the re-spot operations are complete, the conveyor 18 then carries each body to a subsequent manufacturing operation.

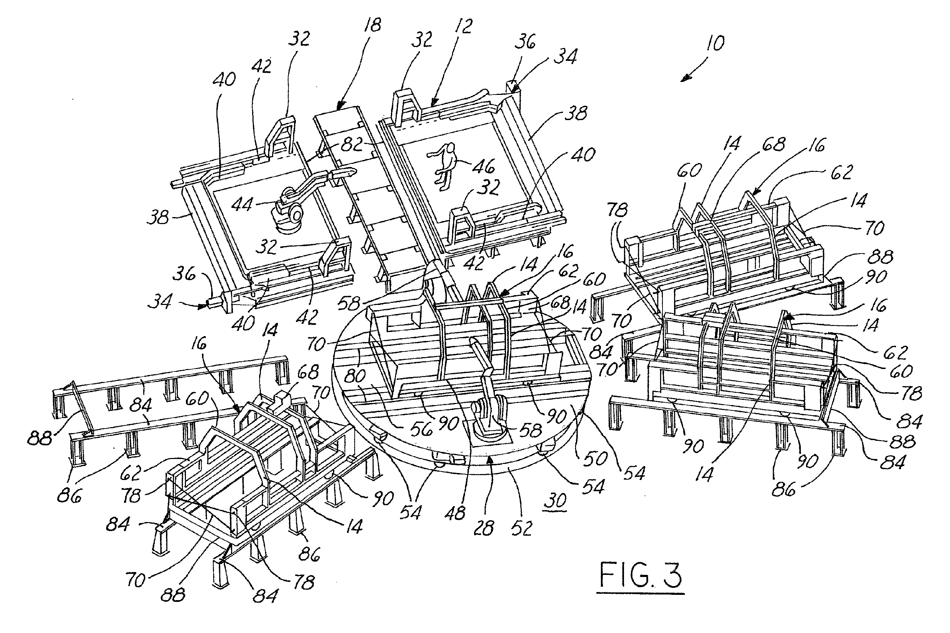

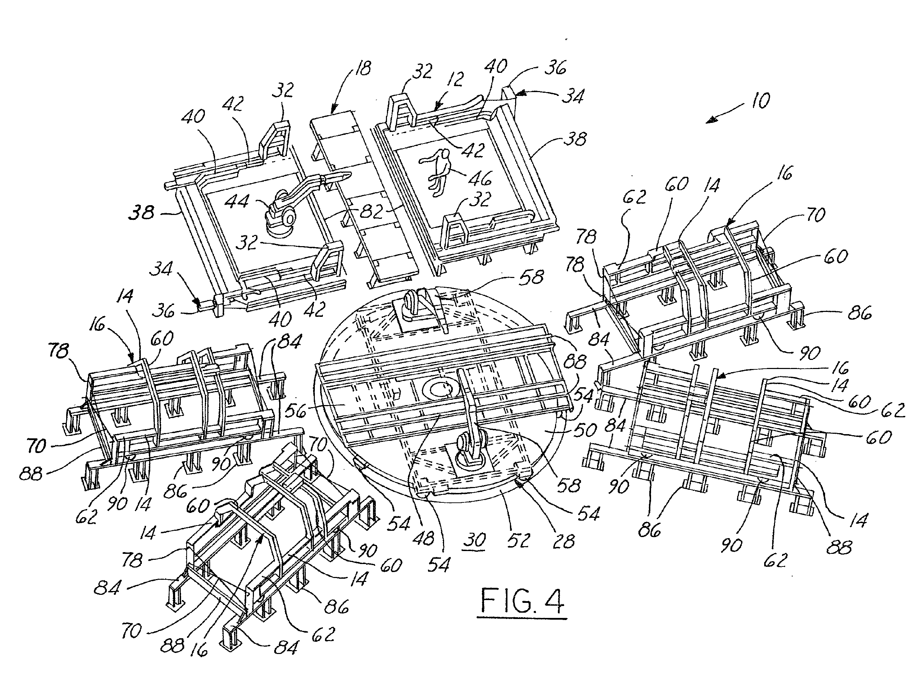

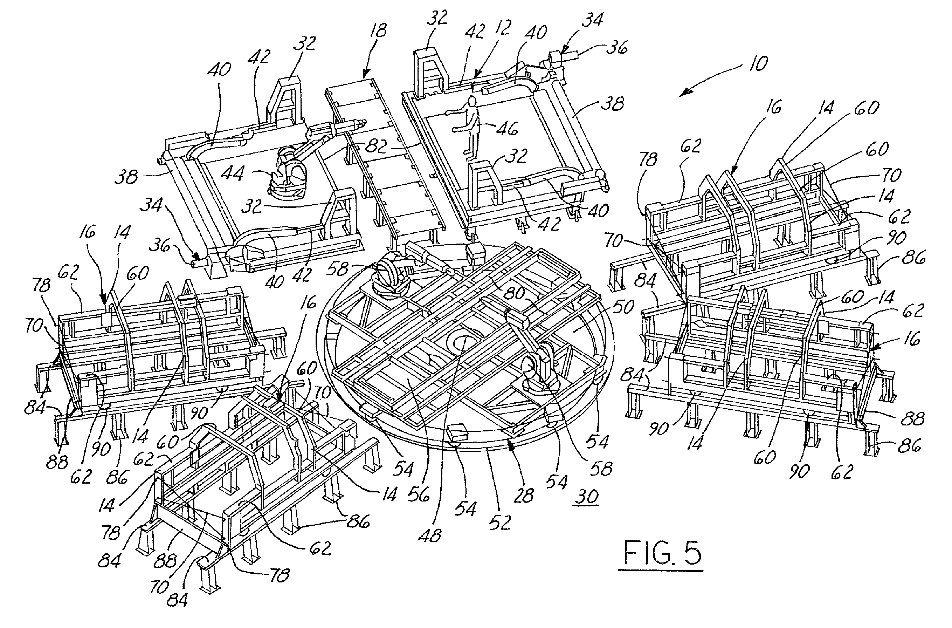

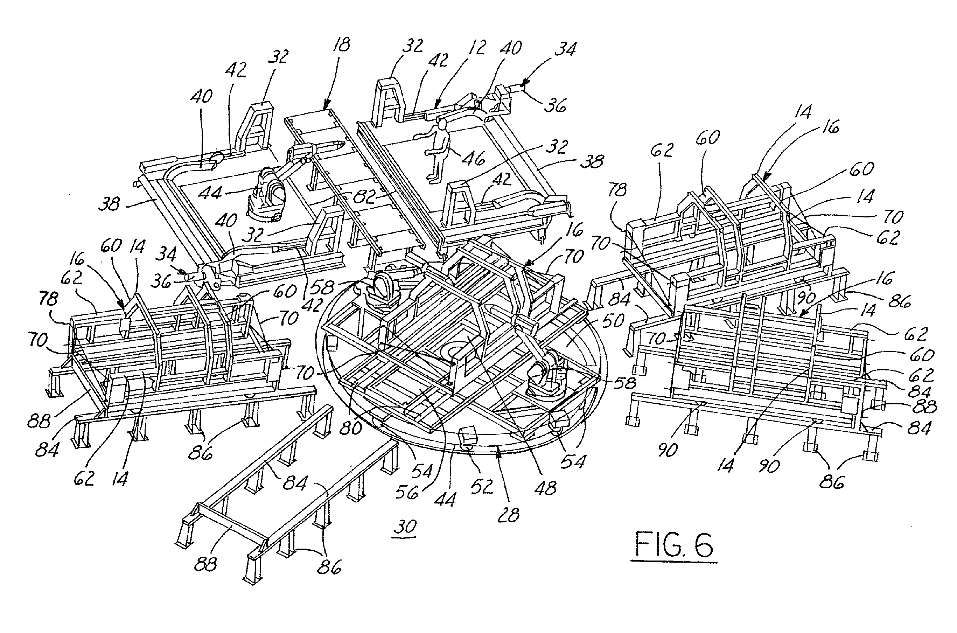

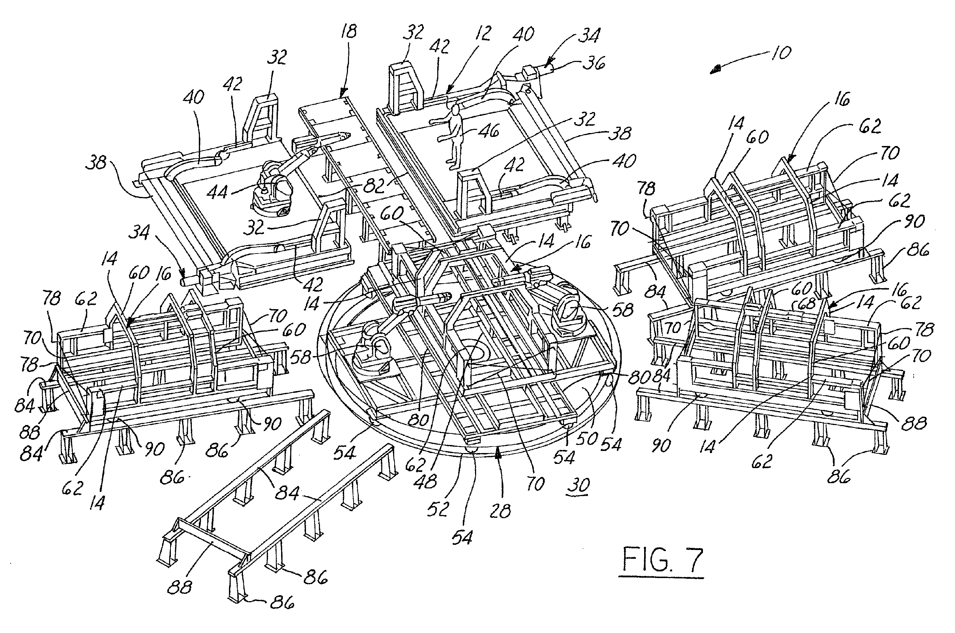

The above process continues until a production run is complete and a predetermined number of auto bodies of a particular configuration has been produced. When it comes time to begin a new production run and produce bodies of a different configuration, the gates 14 present in the framing station 12 must be removed and replaced with gates 14 configured to hold the sub elements of the new body configuration. To accomplish this, the framing drive 34 first moves the gates 14 from their stowed positions, past their framing position, to their transport positions as is best shown in Figures 9-11. As the gates 14 move to their transport positions, the pins 64 located along interfacing surfaces of the extension frames 60 engage the pin receptacles 66 on opposite interfacing edges 62 of the extension frames 60 as shown in Figures 10 and 11. The clamps 68 are then engaged to hold the interfacing edges 62 of the extension frames 60 together. The two pairs of tie bars 70 are then installed as best shown in Figure 11 and the reassembled gate pair 16 is then rolled along the framing station rails 82 and onto the turntable rails 80 as shown in Figure 2. The turntable 28 is then rotated into a position to unload the first gate pair 16 onto an empty storage station. As shown in Figure 3, the turntable 28 is rotated until the turntable rails 80 are aligned with the rails of the empty storage station. The first gate pair 16 is then moved from the turntable 28 to the empty storage station by moving the first gate pair 16 from the turntable rails 80 to the empty storage station rails as shown in Figure 4. The turntable 28 is then rotated into a position to receive a second desired gate pair 16 from a second storage station by rotating the turntable 28 until the turntable rails 80 are aligned with the rails of a second storage station supporting a second gate pair 16 as shown in Figure 5. The second gate pair 16 is then moved onto the turntable 28 from the second storage station by moving the second gate pair 16 along the rails of the second storage station and onto the turntable rails 80 as shown in Figure 6. The turntable 28 is then rotated into a position to unload the second gate pair 16 onto the framing station 12 by rotating the turntable 28 until the turntable rails 80 are aligned with the framing station rails 82 as shown in Figure 7. The second gate pair 16 is then moved to the framing station 12 from the turntable 28 by rolling the second gate pair 16 along the turntable rails 80 and onto the framing station rails 82 as shown in Figure 8. The second gate pair 16 is then engaged by the frame stands 32 and operated as described above with regard to the first gate pair 16 to hold the sub elements of the second run of bodies in place for welding.

As it becomes desirable to produce more of any particular body configuration corresponding to one of the gate pairs 16 stored around the turntable 28, the gate pair 16 corresponding to that body configuration will be retrieved and exchanged with whatever gate pair 16 is presently located at the framing station 12.

This description is intended to illustrate certain embodiments of the invention rather than to limit the invention. Therefore, it uses descriptive rather than limiting words. Obviously, it's possible to modify this invention from what the description teaches. Within the scope of the claims, one may practice the invention other than as described.

## Claims

1. An automotive body component positioning apparatus comprising:
a framing station configured to receive and support the two gates of a framing gate pair in respective framing positions against opposite sides of a vehicle body disposed between them;
at least two framing gate pairs movable between respective gate pair storage stations and the framing station, each framing gate pair including a plurality of locating fixtures positioned and configured to hold sub-elements of a vehicle body in their respective proper positions relative to one another when the gates are held in their respective framing positions, each framing gate pair being adapted to accommodate a specific corresponding vehicle body configuration; and
a turntable rotatably supported adjacent the framing station with the gate storage stations spaced circumferentially around and adjacent the turntable, the turntable configured to be rotated into respective positions to receive a framing gate pair from any one of the stations and to then be rotated into respective positions to allow the framing gate pair to be offloaded to any other of the stations.

2. An automotive body component positioning apparatus as defined in claim 1 in which the turntable is disposed downstream from the framing station along a vehicle body assembly line.

3. An automotive body component positioning apparatus as defined in claim 2 further including a re-spot welding station disposed downstream from the framing station along the vehicle body assembly line and configured to hold a vehicle body received from the welding station in position for additional welds.

4. An automotive body component positioning apparatus as defined in claim 3 in which the re-spot welding station is disposed on the turntable.

5. An automotive body component positioning apparatus as defined in claim 1 in which the framing station includes a framing drive operably connectable to and configured to drive the two gates of a framing gate pair between respective stowed positions spaced from and generally parallel to respective opposite sides of a vehicle body disposed between them, and their respective framing positions.

6. An automotive body component positioning apparatus as defined in claim 5 in which:
the framing station includes a pair of frame stands supported for reciprocal motion toward and away from each other and to receive and move the two gates of a framing gate pair between respective stowed positions spaced from and generally parallel to respective opposite sides of a vehicle body assembly line conveyor disposed between them, and their respective framing positions; and
the framing drive is operatively connected to the frame stands and is configured to move the frame stands so as to drive the framing gates between their stowed and framing positions.

7. An automotive body component positioning apparatus as defined in claim 1 in which:
the framing station includes a pair of parallel rails positioned to support and guide a gate pair as it is being moved between the turntable and the framing station;
each of the storage stations includes a pair of parallel rails positioned to support and guide a gate pair as it is being moved between the turntable and the storage stations and to support the gate pairs during storage; and
the turntable includes a pair of parallel rails positioned to be rotated into alignment with the rails of the framing station and the rails of each of the storage stations and to support and guide gate pairs as they are being moved between the turntable and each of the storage stations.

8. An automotive body component positioning apparatus as defined in claim 7 in which the rails of the framing station are spaced from the rails of the turntable when the framing station and turntable rails are aligned.

9. An automotive body component positioning apparatus as defined in claim 7 in which the rails of the turntable are spaced from the rails of each of the storage stations when the turntable rails are aligned with the respective storage stations.

10. An automotive body component positioning apparatus as defined in claim 1 in which the gates of each gate pair are configured to releasably interconnect when moved to a transport position abutting one another.

11. An automotive body component positioning apparatus as defined in claim 10 in which each gate pair includes a pair of releasably interconnecting extension frames, each extension frame being fixed to an upper edge of one of the gates of the gate pair and configured to releasably interconnect along respective interfacing edges in the transport position.

12. An automotive body component positioning apparatus as defined in claim 11 in which the interfacing edge of at least one of the extension frames of each gate pair includes at least one locating pin engageable with a corresponding pin receptacle in the interfacing edge of the other extension frame of the gate pair.

13. An automotive body component positioning apparatus as defined in claim 11 in which each gate pair includes at least one clamp configured to hold the interconnecting extension frames of each gate pair together in the transport position.

14. An automotive body component positioning apparatus as defined in claim 1 in which each gate pair includes at least one pair of tie bars configured to releasably connect between the two frames of each gate pair while crossing one another in an X configuration.

15. An automotive body component positioning apparatus as defined in claim 14 in which each gate of each gate pair includes two vertically spaced posts, each post configured to releasably engage one end of one of the tie bars.

16. A method for positively locating and holding together loosely assembled components of any one of a number of different automotive body configurations to prepare the components to be welded together in an automotive assembly line process, the method including the steps of:
providing a framing station, at least two framing gate pairs movable between respective gate pair storage stations and the framing station, and a turntable rotatably supported adjacent the framing station with the gate storage stations spaced circumferentially around and adjacent the turntable;
rotating the turntable into a position to receive a first desired gate pair from one of the storage stations;
moving the first desired gate pair onto the turntable from the first storage station;
rotating the turntable into a position to unload the first gate pair onto the framing station; and
moving the first gate pair to the framing station from the turntable.

17. The method of claim 16 in which:
the step of providing a framing station includes providing a pair of parallel rails at the framing station positioned to support and guide a gate pair as it is being moved between the turntable and the framing station;
the step of providing gate storage stations includes providing a pair of parallel rails at each storage station positioned to support and guide a gate pair as it is being moved between the turntable and the storage stations;
the step of providing the turntable includes providing a pair of parallel rails on the turntable positioned to be rotated into alignment with the rails of the framing station and the rails of each of the storage stations;
the step of rotating the turntable into a position to receive a first desired gate pair includes rotating the turntable until the turntable rails are aligned with the rails of the first storage station where the first gate pair is movably supported on the rails;
the step of moving the first gate pair onto the turntable includes moving the first gate pair from the storage station rails to the turntable rails;
the step of rotating the turntable into a position to unload the first gate pair includes rotating the turntable until the turntable rails are aligned with the rails of the framing station; and
the step of moving the first gate pair to the framing station includes moving the first gate pair from the turntable rails to the framing station rails.

18. The method of claim 16 including the additional steps of:
moving the first gate pair to the turntable from the framing station;
rotating the turntable into a position to unload the first gate pair onto an empty storage station;
moving the first gate pair from the turntable to the empty storage station;
rotating the turntable into a position to receive a second desired gate pair from a second storage station;
moving the second gate pair onto the turntable from the second storage station;
rotating the turntable into a position to unload the second gate pair onto the framing station; and
moving the second gate pair to the framing station from the turntable.

19. The method of claim 18 in which:
the step of providing a framing station includes providing a pair of parallel rails at the framing station positioned to support and guide a gate pair as it is being moved between the turntable and the framing station;
the step of providing gate storage stations includes providing a pair of parallel rails at each storage station positioned to support and guide a gate pair as it is being moved between the turntable and the storage stations;
the step of providing the turntable includes providing a pair of parallel rails on the turntable positioned to be rotated into alignment with the rails of the framing station and the rails of each of the storage stations;
the step of moving the first gate pair to the turntable includes moving the first gate pair from the framing station rails to the turntable rails;
the step of rotating the turntable into a position to unload the first gate pair includes rotating the turntable until the turntable rails are aligned with the rails of the empty storage station;
the step of moving the first gate pair from the turntable includes moving the first gate pair from the turntable rails to the empty storage station rails;
the step of rotating the turntable to a position to receive a second desired gate pair includes rotating the turntable until the turntable rails are aligned with the rails of a second storage station supporting the second gate pair;
the step of moving the second gate pair onto the turntable includes moving the second gate pair from the rails of the second storage station to the turntable rails;
the step of rotating the turntable into a position to unload the second gate pair includes rotating the turntable until the turntable rails are aligned with the framing station rails; and
the step of moving the second gate pair to the framing station includes moving the second gate pair from the turntable rails to the framing station rails.
